# EUROPEAN PATENT SPECIFICATION

(11) **EP 0 450 841 B1**
(45) Date of publication and mention of the grant of the patent: **21.08.1996**
(21) Application number: 91302657.1
(22) Date of filing: 25.03.1991
(51) Int. Cl.: H04N 7/16

(54) **Video control system**
Überwachungssystem für die Übertragung von Videosignalen
Système de contrôle pour la transmission de signaux vidéo

(30) Priority: 29.03.1990 US 501620; 29.03.1990 US 501682; 29.03.1990 US 501683; 29.03.1990 US 561684; 29.03.1990 US 501685; 29.03.1990 US 501688
(43) Date of publication of application: 09.10.1991
(73) Proprietor: GTE LABORATORIES INCORPORATED, Wilmington Delaware 01901 (US)
(72) Inventor: Walker, Stephen S., Marlborough, MA 01752 (US); Sidlo, Clarence M., Framlingham, MA 01701 (US); Teare, Melvin J., Framlingham, MA 01701 (US)
(74) Representative: Bubb, Antony John Allen

(56) References cited:
- EP-A- 0 132 401
- GB-A- 2 132 860
- US-A- 4 528 589
- US-A- 4 694 491
- FUNKSCHAU, vol. 5, 1989, Franzis Verlag, Munich, CHARLES SCHEPERS "Der Schlüssel zum Scrambling Problem?" pages 59-62

## Description

This invention is concerned with video control systems.

In the prior art, a software distribution system is known wherein a computer program is downloaded once, followed by an access key to allow use of it on each subsequent use. This system uses a dynamic key that constantly changes, and is directly related to a user's decoder box, both by ID and an internal dynamic counter.

Also known is a video system that autonomously controls the viewing of a recording for either 24 hours or once only.

There is also known - see GB-A-2132860 a conditional access broadcast system having the features of the preamble of Claim 1. Such an arrangement is intended to be used by provision to the viewer of any necessary code encryption keys on a periodic basis such that viewing of a plurality of programs can be achieved on a prepayment or direct debit system without change of the code encryption, the same key being used with transmissions over a period of typically one month. It is also known, see EP-A-0132401 to utilise in a similar arrangement selected 'tier' code encryption keys that can designate category of program and channel of transmission.

It is desirable however to provide a video control system which decrypts encrypted broadcasts or recorded copies of video material such that the subsequent viewing is controlled. This would allow the owner to either forbid viewing, or collect revenue at his or her discretion.

The above mentioned systems do not provide the power of control required to achieve this object.

In accordance with the invention there is therefore provided a system having the features of the characterising clause of Claim 1.

One embodiment of the invention will now be described, by way of example, with reference to the accompanying drawings in which:

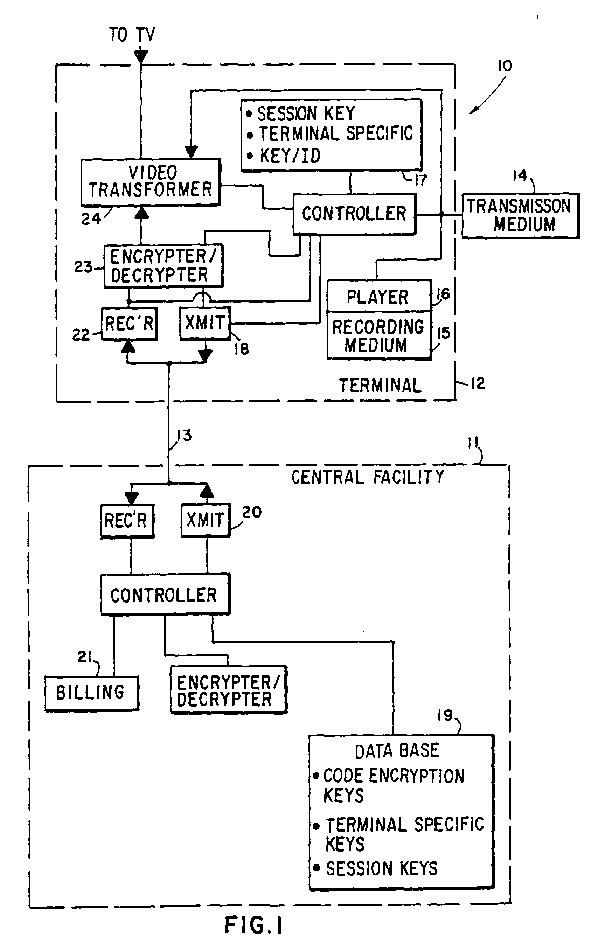

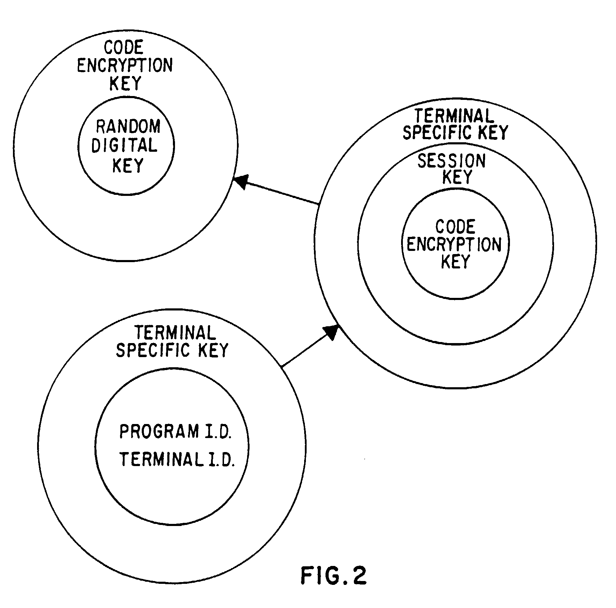

Figure 1 is a block diagram of a video system embodying the invention; and Figure 2 shows an encryption arrangement according to the invention.

Reference is made to Figure 1 which is a block diagram of a video system 10 embodying the invention. The video system comprises a central facility 11, a terminal 12, and a duplex communication link 13 between central facility 11 and terminal 12. An overview of the system is first given.

Terminal 12 is provided with a video program including a series of television fields including a first field containing both a random digital code encrypted according to a code encryption key and program identification data, and a second field containing an unintelligible video signal previously transformed from an intelligible video signal according to the random digital code.

The video program may be transmitted by broadcast, cable, satellite, fiber, or any other transmission medium 14. Alternative the video program may be stored on a video recording medium 15 such as magnetic tape or video disk and played by player 16. The unintelligible video signal may be either analog or digital.

A second field has a vertical blanking interval containing both a random digital code encrypted according to a code encryption key and program identification data, is followed by a third field containing an unintelligible video signal previously transformed from an intelligible video signal according to the random digital code of the second field.

Terminal 12 includes means 17 to store terminal identification data and means to send to the central facility 11 the terminal identification data and the program identification data over link 13.

Central facility 11 includes a data base 19 for storing and retrieving at least one code encryption key corresponding to the program identification data, means 20 for sending the code encryption key from the central facility 11 to the terminal 12, and means 21 for generating billing data based on both terminal identification data and program identification data.

Terminal 12 further including means 22 for receiving the code encryption key from central facility 11, decrypting means 23 for decrypting the encrypted random digital code of the first frame in accordance with the code encryption key, and means 24 for transforming the unintelligible video signal of the second frame to the intelligible video signal using the decrypted random digital code.

Each terminal 12 may have a terminal specific encryption key and means 18 to send to the central facility the program identification data and the terminal 11 identification data encrypted according to the terminal specific encryption key. The central facility 11 has means for storing a duplicate of the terminal specific encryption key, means for encrypting the code encryption key according to the terminal specific encryption key; and means for sending the encrypted code encryption key from central facility 11 to terminal 12.

Terminal 12 further includes means 22 for receiving the encrypted code encryption key from central facility 11, decryption means 23 for decrypting the code encryption key according to the terminal specific encryption key, and decrypting the encrypted random digital code of the first frame in accordance with the code encryption key, and means 24 for transforming the unintelligible video signal of the second frame to the intelligible video signal using the decrypted random digital code.

Terminal 12 includes means to encrypt the terminal identification data according to the terminal specific encryption key, means to send unencrypted terminal identification data and encrypted terminal identification data to the central facility, which in turn includes means to compare unencrypted and encrypted terminal identification data to verify terminal identity.

A plurality of code encryption keys may be used for one program wherein a desired code encryption key is selected from the plurality of code encryption keys in accordance with code encryption key identification data corresponding to the random digital code.

Various features of the system are now discussed in more detail.

System 10 controls the viewing of video programs, by which is meant any video material, either transmitted or recorded, in television format consisting of a series of fields of lines. Two interlaced fields make up a television frame.

Video programs are rendered unintelligible, e.g. scrambled, by any analog or digital method, and are made intelligible, e.g. descrambled, using random digital codes located in fields. The random digital keys are themselves encrypted, and decrypted by a one or more key obtained from a database located at the central facility, along with user-specific information at the time of viewing. The system does not stop copying, it controls viewing, while protecting revenues. As such, it can encourage copying, which could ease the distribution issue by controlling the playback such that revenue can be collected each time.

Preferably duplex communication link 13 is a continuous data channel between a terminal and a central facility such as an ISDN D-channel or by modem over a regular phone line.

The video program is encrypted, and needs a decrypter in the terminal for viewing. The decrypter uses data embedded in the video program along with a data access to correctly perform the decryption, so the process is completely controlled. The embedded data and key transfer from the remote database may be protected with public domain encryption techniques, providing high level security before first viewing.

The video program may be recorded as is, but it is still unviewable. To view it, the decrypter is used, along with the encrypted embedded data, and an access to a secure database, to perform the decryption. Recordings may be freely copied, but remain unviewable unless used with the decrypter.

To view the programs requires access to the database using encrypted data transfer. This process yields the control of the video program, whether recording or trans mission. The decrypter requires one or more keys that arrives from the database. To get the key, information from the video program as well as terminal identification is sent to the database.

A direct Electronic funds Transfer (EFT) debit can be performed using the information. It the program is a video store copy, the EFT could include the store fee and the copyright fee. Note that the video distribution to video stores becomes trivial, as they are encouraged to take a direct recording with a video store key, along with their authorized converter box, and make as many copies as they like. The revenue control takes place at viewing time. This encourages a shareware type of distribution.

A passkey can be sent to the database, to allow viewing of questionable taste films by adults, controlling access by minors.

On the first access, the database will capture a signature derived from the user's equipment and the recording, and store it for subsequent tracking. As there is a compelled database access in this process, data on usage may be collected. This same process may be used for revenue collection.

The system preferably uses at least one downloadable key, an encrypted video program that uses the key for decryption, and data stored in a field of the video program. It may be implemented in an all digital, analog, or mixed analog/digital environment.

The video programs are encrypted, with data relating to the programs, e.g. where and when, who transmitted it. The data may also contain part of the decryption key. This information would be extracted from the signal, and used to access a database, maintained by the program's owners, to obtain an encrypted key for the decrypter. After a subscriber and/or a credit check is successfully completed, the one or more keys would be transmitted. At this time the owner has obtained usage data, with a specific user's ID, and has the option of billing him. If it is a free program, at least the viewer data is available.

If a user records a transmission or another recording, he captures the encrypted signal, along with embedded data, as described above. This accomplishes the signature part of the process. A recording created by this method may be on a regular VCR, but is encrypted and individually marked. Copying a recording does not affect the system, as the rerecording is only usable with the correct keys. Potentially, the first few minutes of a program might be viewable without the need of a key, to allow the user to see what the contents of the program are, as well as to allow time for the database access and key synchronization process.

To play a recording back, it is necessary to re-obtain the one or more keys. The combination of data stored in a field is used to access the database. Before the keys are made available, there is a check that the terminal identification and the embedded data match.

In the case wherein a recording is rented from a video store, a code may identify the store. The database recognizes the recording as a rental copy, and charge either the user or the video store a fee. If the recording is viewed a second time, the charge is repeated. In the event a copy is made, when it is played, the database will identify the originating video store, but not the actual copier. However, if validation is performed at rental time, there would be some measure of control. If the entire charging process were to be reversed, such that the viewer carries all the liability for charges, then copying is encouraged, as per shareware, and the distribution problem is minimized, while revenues are maintained on a usage basis.

The program's owner has the responsibility to get a secured copy to whoever deals with the distribution of the programs. The programs are encrypted, and require a database update to enable viewers to make use of the program. The viewer has a terminal including a decrypter, linked to the central facility's database via an automatic dial-up, that, when enabled, decrypts the video program. As appropriate, there can be credit checks and billing from the database, as well as statistics collection.

The encryption has two levels, one for protection of video decryption codes on the program, and one for protection of messages between the terminal and the central facility. Both may use the NBS Data Encryption Standard (DES).

DES encryption and decryption may be implemented with a commercial Motorola 6859 Data Security Device or similar product at the terminal and at the central facility.

The decryption code itself is protected by being DES-encrypted. The decryption key is not on the video program but is retained in the database at the central facility. A program identification number and a decryption key number allow the central facility to recover the decryption key itself and send it to the terminal for decrypting the decryption codes.

A different DES decryption key is not required for every field. One key can span several fields. DES key requests and acknowledgements from the terminal may also act as keep-alive messages to the central facility.

DES decryption keys are transmitted from the central facility to the terminal protected by a higher-level DES "session" key. terminal requests for new keys as the tape progresses are also protected by the DES session key. This key is generated by the central facility at the beginning of the session and remains valid for the duration of the session. The terminal begins the session using a terminal-unique DES key stored in a ROM.

Frame contents are transferred from the Analog Subsystem to the DCSS and the decrypted decryption code from the DCSS to the Analog Subsystem over the analog interface shown in the Figure. Transfer of data between the subsystems may be coordinated by means of the vertical and horizontal blanking signals and their derivative interrupts.

All messages between terminal and central facility use Cyclic Redundancy Code (CRC) checking to verify message integrity. The CRC-CCITT generating polynomial generates two block check characters (BCC) for each message. If the terminal receives a message that is not verified by the BCC, it sends a request (ARQ) to the central facility to retransmit the last message. The central facility does not attempt to ARQ garbled messages. It discards them and waits for a terminal to send again.

Message exchange in the VCS is by a positive acknowledgent scheme in which a response of some kind is expected for every message sent. For example, a terminal expects a DES decryption key message after it sends a request for the same; the central facility expects a key receipt acknowledge after it sends the key message.

When a user begins to play a protected program, the terminal initiates a session by sending a "session start" message (STS) to the central facility containing user and program identifications. The message contains message type, user number and CRC code in the clear, but the balance of the message is DES-encrypted with the initial DES session key stored in the terminal ROM. (The user identification is also stored in ROM.) The central facility uses the unencrypted data to access its database and find the user DES value for decrypting the remainder of the message.

The central facility authenticates the message by comparing clear and decrypted user numbers. If the user numbers are identical, the central facility then confirms that the program serial number is valid. The central facility may also check user credit. If all is well, the central facility accepts the session and generates a new (and random) DES key that is unique for that session. It encrypts this using the initial user value in the database and sends it to the terminal, which decrypts the message and stores the new value in its database (MCU RAM) as the session key for the remainder of the session.

The central facility then uses the tape and decryption key number in the STS message to recover a set of DES decryption keys for the program from the database. These are encrypted with the session key and sent to the terminal at the start of a session or during the course of a session.

The terminal generates session start, key acknowledgement, and ARQ messages. The central facility responds in kind. Both the central facility and the terminal generate and verify block check characters.

The preferred embodiment and best mode of practicing the invention have been described. Alternatives now will be apparent to those skilled in the art in light of these teachings. Accordingly the invention is to be defined by the following claims and not by the particular examples given.

## Claims

1. A video system comprising:
a central facility (11);
a terminal (10) equipped with a data communication link (13) to be coupled to said central facility (11); and video program means (14;15,16) for providing to said terminal a video program comprising a series of television fields including an unintelligible video signal previously transformed from an intelligible video signal according to a random digital code together with a signal comprising said random digital code encrypted according to a code encryption key;
said central facility including a data base (19) for storing and retrieving at least one code encryption key and means (20) for sending said code encryption key to said terminal (10) via said data communication link (13); and said terminal (10) further including means (22) for receiving the code encryption key from said central facility (11); decrypting means (23) for decrypting the encrypted random digital code in accordance with said code encryption key and means (24) for transforming said unintelligible video signal to said intelligible video signal using the decrypted random digital code;
characterised in that said video program means (14;15,16) is arranged to provide in a preliminary field of said video program the said signal comprising the random digital code encrypted according to a code encryption key specific to said program, together with program identification data identifying said program, and to provide in a subsequent field of said video program the said unintelligible video signal transformed with the said digital code contained in the preliminary field;
that said terminal means (10) is adapted to respond to receipt of said preliminary field during provision of said video program and to provide said program identification data from said field to said central facility via said data link;
and that said central facility (11) is arranged to respond to receipt of said program identification data by selecting from said database (19) the said code encryption key specific to said program and by providing said key to said terminal via said data link (13) whereby said terminal is enabled to retransform said unintelligible video signal of said subsequent field.

2. The system of Claim 1 wherein a plurality of code encryption keys are used for one program, and wherein a desired code encryption key is selected from said plurality of code encryption keys in accordance with code encryption key identification data corresponding to the random digital code encrypted with said desired code encryption key.

3. The system of Claim 1 or 2 wherein said subsequent field has a vertical blanking interval containing both a random digital code encrypted according to a code encryption key and program identification data, and is followed by a further field containing an unintelligible video signal previously transformed from an intelligible video signal according to said random digital code of the second field.

4. The system of any one of Claims 1 - 3 wherein said video program means is means for transmitting said program to said terminal.

5. The system of Claim 4 wherein said means for transmitting is a CATV system.

6. The video system of any one of Claims 1-5 wherein said video program means is a means (16) located at said terminal for playing a video recording medium storing said program.

7. The video system of Claim 6, in combination with a video recording medium (15) storing said video program.

8. The system of any one of Claims 1-7 wherein:
said terminal (10) further includes means (17) to store terminal identification data and a terminal specific encryption key; and means (18) to send to said central facility (11) said terminal identification data with said program identification data;
said central facility (11) further includes means (19) for storing a duplicate of said terminal specific encryption key; means for encrypting said code encryption key according to said terminal specific encryption key; and means (20) for sending the encrypted code encryption key from said central facility to said terminal; and
said terminal further includes means (22) for receiving the encrypted code encryption key from said central facility; and decryption means (23) for decrypting said code encryption key according to said terminal specific encryption key.

9. The video system of any one of Claims 1-8 wherein:
said terminal (10) further includes means (17) to store terminal identification data and a terminal specific encryption key; and means (18) to send to said central facility (11) said program identification data and said terminal identification data,
said central facility further includes means (19) for providing a session encryption key; means for encrypting said session encryption key according to said terminal specific encryption key; means (20) for sending the encrypted session encryption key from said central facility to said terminal; means for encrypting said code encryption key according to said encrypted session encryption key; and means (20) for sending the encrypted code encryption key from said central facility to said terminal; and
said terminal further includes means (22) for receiving the encrypted session encryption key from said central facility; decryption means (23) for decrypting said session encryption key according to said terminal specific encryption key, means (22) for receiving the encrypted code encryption key from said central facility; and decryption means (23) for decrypting said code encryption key according to said session encryption encryption key.

10. The system of Claim 8 or 9 wherein said terminal includes means (23) to encrypt said terminal identification data according to said terminal specific encryption key, and means (18) to send unencrypted terminal identification data and encrypted terminal identification data to said central facility and said central facility (11) includes means to compare unencrypted and encrypted terminal identification data to authenticate terminal identity.

11. The system of any one of Claims 5-10 wherein said central facility further includes means (21) for generating billing data based on said terminal identification data and said program identification data.

## Patentansprüche

1. Videosystem, das umfaßt:
eine zentrale Einrichtung (11);
ein Endgerät (10), das mit einer Datenübertragungsverbindung (13) ausgerüstet ist, die mit der zentralen Einrichtung (11) zu verbinden ist, und eine Videoprogrammeinrichtung (14; 15, 16), die dem Endgerät ein Videoprogramm zur Verfügung stellt, das eine Serie von Fernseh-Halbbildern umfaßt, die ein nach Maßgabe eines zufälligen Digitalcodes von einem vernehmbaren Videosignal vorangehend umgewandeltes unvernehmbares Videosignal zusammen mit einem Signal einschließt, das den nach Maßgabe eines Codeverschlüsselungsschlüssels verschlüsselten zufälligen Digitalcode umfaßt,
wobei die zentrale Einrichtung eine Datenbank (19) zum Speichern und Wiedergewinnen wenigstens eines Codeverschlüsselungsschlüssels und eine Einrichtung (20) zum Senden des Codeverschlüsselungsschlüssels über die Datenübertragungsverbindung (13) an das Endgerät (10) enthält, und das Endgerät (10) weiter eine Einrichtung (22) zum Empfangen des Codeverschlüsselungsschlüssels von der zentralen Einrichtung (11), eine Entschlüsselungseinrichtung (23) zum Entschlüsseln des verschlüsselten zufälligen Digitalcodes nach Maßgabe des Codeverschlüsselungsschlüssels und eine Einrichtung (24) zum Umwandeln des unvernehmbaren Videosignals in das vernehmbare Videosignal unter Verwendung des entschlüsselten zufälligen Digitalcodes enthält,
dadurch gekennzeichnet, daß die Videoprogrammeinrichtung (14; 15, 16) eingerichtet ist, in einem einleitenden Halbbild des Videoprogramms das Signal bereitzustellen, das den nach Maßgabe eines für das Programm spezifischen Codeverschlüsselungsschlüssels verschlüsselten zufälligen Digitalcode zusammen mit Programm-Identifizierungsdaten umfaßt, die das Programm identifizieren, und in einem nachfolgenden Halbbild des Videoprogramms das mit dem in dem einleitenden Halbbild enthaltenen Digitalcode umgewandelte unvernehmbare Videosignal bereitzustellen,
daß die Endgeräteeinrichtung (10) eingerichtet ist, auf den Empfang des einleitenden Halbbildes während der Bereitstellung des Videoprogramms zu antworten und die Programm-Identifizierungsdaten des Halbbildes der zentralen Einrichtung über die Datenverbindung zur Verfügung stellen,
und daß die zentrale Einrichtung (11) eingerichtet ist, auf den Empfang der Programm-Identifizierungsdaten zu antworten, indem sie aus der Datenbank (19) den für das Programm spezifischen Codeverschlüsselungsschlüssel auswählt und den Schlüssel dem Endgerät über die Datenverbindung (13) zur Verfügung stellt, wodurch dem Endgerät ermöglicht wird, das unvernehmbare Videosignal des nachfolgenden Halbbildes zurückzuverwandeln.

2. System nach Anspruch 1, bei dem für ein Programm eine Mehrzahl von Codeverschlüsselungsschlüsseln verwendet wird, und bei dem ein gewünschter Codeverschlüsselungsschlüssel aus der Mehrzahl von Codeverschlüsselungsschlüsseln nach Maßgabe von Codeverschlüsselungsschlüssel-Identifizierungsdaten, die dem mit dem gewünschten Codeverschlüsselungsschlüssel verschlüsselten zufälligen Digitaldaten entsprechen, ausgewählt wird.

3. System nach Anspruch 1 oder 2, bei dem das nachfolgende Halbbild ein Vertikal-Austastintervall besitzt, das sowohl einen nach Maßgabe eines Codeverschlüsselungsschlüssels verschlüsselten zufälligen Digitalcode als auch Programm-Identifizierungsdaten enthält, und von einem weiteren Halbbild gefolgt wird, das ein vorangehend nach Maßgabe des zufälligen Digitalcodes des zweiten Habbildes von einem vernehmbaren Videosignal umgewandeltes unvernehmbares Videosignal enthält.

4. System nach einem der Ansprüche 1 - 3, bei dem die Videoprogrammeinrichtung eine Einrichtung zum übertragen des Programms zu dem Endgerät ist.

5. System nach Anspruch 4, bei dem die Einrichtung zum übertragen ein CATV-System ist.

6. Videosystem nach einem der Ansprüche 1 - 5, bei dem die Videoprogrammeinrichtung eine in dem Endgerät gelegene Einrichtung (16) zum Abspielen eines Video-Aufzeichnungsmediums ist, das das Programm speichert.

7. Videosystem nach Anspruch 6 in Kombination mit einem Video-Aufzeichnungsmedium (15), das das Videoprogramm speichert.

8. System nach einem der Ansprüche 1 - 7, bei dem:
das Endgerät (10) weiter eine Einrichtug (17) umfaßt, um Endgeräte-Identifizierungsdaten und einen endgerätespezifischen Verschlüsselungsschlüssel zu speichern, sowie eine Einrichtung (18), um der zentralen Einrichtung (11) die Endgeräte-Identifizierungsdaten mit den Programm-Identifizierungsdaten zu senden;
die zentrale Einrichtung (11) weiter eine Einrichtung (19) zum Speichern eines Duplikats des endgerätespezifischen Verschlüsselungsschlüssels, eine Einrichtung zum Verschlüsseln des Codeverschlüsselungsschlüssels nach Maßgabe des endgerätespezifischen Verschlüsselungsschlüssels sowie eine Einrichtung (20) zum Senden des verschlüsselten Codeverschlüsselungsschlüssels von der zentralen Einrichtung an das Endgerät umfaßt und
das Endgerät weiter eine Einrichtung (22) zum Empfangen des verschlüsselten Codeverschlüsselungsschlüssels von der zentralen Einrichtung sowie eine Entschlüsselungseinrichtung (23) zum Entschlüsseln des Codeverschlüsselungsschlüssels nach Maßgabe des endgerätespezifischen Verschlüsselungsschlüssels umfaßt.

9. Videosystem nach einem der Ansprüche 1 - 8, bei dem:
das Endgerät (10) weiter eine Einrichtung (17) umfaßt, um Endgeräte-Identifizierungsdaten und einen endgerätespezifischen Verschlüsselungsschlüssel zu speichern, sowie eine Einrichtung (18), um der zentralen Einrichtung (11) die Programm-Identifizierungsdaten und die Endgeräte-Identifizierungsdaten zu senden;
die zentrale Einrichtung weiter eine Einrichtung (19) zum Bereitstellen eines Sitzungs-Verschlüsselungsschlüssels, eine Einrichtung zum Verschlüsseln des Sitzungs-Verschlüsselungsschlüssels nach Maßgabe des endgerätespezifischen Verschlüsselungsschlüssels, eine Einrichtung (20) zum Senden des verschlüsselten Sitzungs-Verschlüsselungsschlüssels von der zentralen Einrichtung an das Endgerät, eine Einrichtung zum Verschlüsseln des Codeverschlüsselungsschlüssels nach Maßgabe des verschlüsselten Sitzungs-Verschlüsselungsschlüssels sowie eine Einrichtung (20) zum Senden des verschlüsselten Codeverschlüsselungsschlüssels von der zentralen Einrichtung an das Endgerät umfaßt und
das Endgerät weiter eine Einrichtung (22) zum Empfangen des verschlüsselten Sitzungs-Verschlüsselungsschlüssels von der zentralen Einrichtung, eine Entschlüsselungseinrichtung (23) zum Entschlüsseln des Sitzungs-Verschlüsselungsschlüssels nach Maßgabe des endgerätespezifischen Verschlüsselungsschlüssels, eine Einrichtung (22) zum Empfangen des verschlüsselten Codeverschlüsselungsschlüssels von der zentralen Einrichtung sowie eine Entschlüsselungseinrichtung (23) zum Entschlüsseln des Codeverschlüsselungsschlüssels nach Maßgabe des Sitzungsverschlüsselungs-Verschlüsselungsschlüssels.

10. System nach Anspruch 8 oder 9, bei dem das Endgerät eine Einrichtung (23) umfaßt, um die Endgeräte-Identifizierungsdaten nach Maßgabe des endgerätespezifischen Verschlüsselungsschlüssels zu verschlüsseln, sowie eine Einrichtung (18), um unverschlüsselte Endgeräte-Identifizierungsdaten und verschlüsselte Endgeräte-Identifizierungsdaten an die zentrale Einrichtung zu senden, und die zentrale Einrichtung (11) eine Einrichtung umfaßt, um unverschlüsselte und verschlüsselte Endgeräte-Identifizierungsdaten zu vergleichen, um die Identität des Endgerätes zu verbürgen.

11. System nach einem der Ansprüche 5 - 10, bei dem die zentrale Einrichtung weiter eine Einrichtung (21) umfaßt, die auf der Basis der Endgeräte-Identifizierungsdaten und der Programm-Identifizierungsdaten Abrechnungsdaten erzeugt.

## Revendications

1. Système vidéo comprenant :
une installation centrale (11) ;
un terminal (10) équipé d'une liaison de communication de données (13) destinée à être couplée à la dite installation centrale (11) ; et
un moyen de programmation vidéo (14 ; 15, 16) pour délivrer au dit terminal un programme vidéo comprenant une série de champs de télévision incluant un signal vidéo inintelligible précédemment transformé à partir d'un signal vidéo intelligible selon un code numérique aléatoire en même temps qu'un signal comprenant le dit code numérique aléatoire crypté selon une clef de cryptage du code ;
la dite installation centrale incluant une banque de données (19) pour mémoriser et retrouver au moins une clef de cryptage du code, et un moyen (20) pour envoyer la clef de cryptage du code au dit terminal (10) par l'intermédiaire de la dite liaison de communication de données (13); et le dit terminal (10) incluant, en outre, un moyen (22) de réception de la clef de cryptage du code issue de la dite installation centrale (11) ; un moyen de décryptage (23) pour décrypter le code numérique aléatoire crypté selon la dite clef de cryptage du code et un moyen (24) pour transformer le dit signal vidéo inintelligible en le dit signal vidéo intelligible en utilisant le code numérique aléatoire décrypté ;
caractérisé en ce que le dit moyen de programmation vidéo (14 ; 15, 16) est arrangé pour délivrer dans un champ préliminaire du dit programme vidéo le dit signal comprenant le code numérique aléatoire crypté selon une clef de cryptage du code spécifique au dit programme, avec une donnée d'identification du programme identifiant le dit programme, et pour délivrer dans un champ suivant du dit programme vidéo le dit signal vidéo inintelligible transformé au moyen du dit code numérique contenu dans le champ préliminaire ;
en ce que le dit moyen de terminal (10) est adapté pour répondre à la réception du dit champ préliminaire pendant la fourniture du dit programme vidéo et pour délivrer la dite donnée d'identification du programme à partir du dit champ à la dite installation centrale par l'intermédiaire de la dite liaison de données ;
et en ce que la dite installation centrale (11) est arrangée pour répondre à la réception de la dite donnée d'identification du programme par une sélection dans la dite banque de données (19) de la dite clef de cryptage du code spécifique au dit programme et en délivrant la dite clef au dit terminal par l'intermédiaire de la dite liaison de données (13), de manière à ce que le dit terminal soit rendu capable de re-transformer le dit signal vidéo inintelligible du dit champ suivant.

2. Système selon la revendication 1 dans lequel une pluralité de clefs de cryptage du code est utilisée pour un programme, et dans lequel une clef de cryptage du code désirée est choisie dans la dite pluralité de clefs de cryptage du code selon la donnée d'identification de la clef de cryptage du code correspondant au code numérique aléatoire crypté avec la dite clef de cryptage du code désirée.

3. Système selon la revendication 1 ou 2 dans lequel le dit champ suivant comporte un intervalle caché vertical contenant à la fois un code numérique aléatoire crypté selon une clef de cryptage du code et une donnée d'identification du programme, et est suivi par un autre champ contenant un signal vidéo inintelligible préalablement transformé d'un signal vidéo intelligible selon le dit code numérique aléatoire du deuxième champ.

4. Système selon l'une quelconque des revendications 1 à 3 dans lequel le dit moyen de programmation vidéo est un moyen de transmission du dit programme au dit terminal.

5. Système selon la revendication 4 dans lequel le dit moyen de transmission est un système de télévision par câble.

6. Système vidéo selon l'une quelconque des revendications 1 à 5 dans lequel le dit moyen de programmation vidéo est un moyen (16) disposé dans le dit terminal pour lire un moyen d'enregistrement vidéo emmagasinant le dit programme.

7. Système vidéo selon la revendication 6, en combinaison avec un moyen d'enregistrement vidéo (15) emmagasinant le dit programme vidéo.

8. Système selon l'une quelconque des revendications 1 à 7 dans lequel :
le dit terminal (10) inclut, en outre, un moyen (17) pour mémoriser une donnée d'identification du terminal et une clef de cryptage spécifique du terminal ; et un moyen (18) pour adresser à la dite installation centrale (11) la dite donnée d'identification du terminal avec la dite donnée d'identification du programme ;
la dite installation centrale (11) inclut, en outre, un moyen (19) pour mémoriser une copie de la dite clef de cryptage spécifique du terminal; un moyen pour crypter la dite clef de cryptage du code selon la dite clef de cryptage spécifique du terminal ; et un moyen (20) pour adresser la clef de cryptage du code cryptée à partir de la dite installation centrale au dit terminal ; et
le dit terminal inclut, en outre, un moyen (22) de réception de la clef de cryptage du code cryptée issue de la dite installation centrale ; et un moyen de décryptage (23) pour décrypter la dite clef de cryptage du code selon la dite clef de cryptage spécifique du terminal.

9. Système vidéo selon l'une quelconque des revendications 1 à 8 dans lequel :
le dit terminal (10) inclut, en outre, un moyen (17) pour mémoriser une donnée d'identification du terminal et une clef de cryptage du terminal ; et un moyen (18) pour envoyer à la dite installation centrale (11) la dite donnée d'identification du programme et la dite donnée d'identification du terminal ;
la dite installation centrale inclut, en outre, un moyen (19) pour délivrer une clef de cryptage de séance ; un moyen pour crypter la dite clef de cryptage de séance selon la dite clef de cryptage spécifique du terminal ; un moyen (20) pour adresser la clef cryptée de cryptage de séance issue de la dite installation centrale au dit terminal ; un moyen pour crypter la dite clef de cryptage du code selon la dite clef cryptée de cryptage de séance ; et un moyen (20) pour adresser la clef cryptée de cryptage du code issue de la dite installation centrale au dit terminal ; et
le dit terminal inclut, en outre, un moyen (22) de réception de la clef cryptée de cryptage de séance issue de la dite installation centrale ; un moyen de décryptage (23) pour décrypter la dite clef de cryptage de séance selon la dite clef de cryptage spécifique du terminal, un moyen (22) de réception de la clef cryptée de cryptage du code issue de la dite installation centrale ; et un moyen de décryptage (23) pour décrypter la dite clef de cryptage du code selon la dite clef de crytage de séance.

10. Système selon la revendication 8 ou 9 dans lequel le dit terminal inclut un moyen (23) de cryptage de la dite donnée d'identification du terminal selon la dite clef de cryptage spécifique du terminal, et un moyen (18) pour adresser la donnée non cryptée d'identification du terminal et la donnée cryptée d'identification du terminal à la dite installation centrale, et la dite installation centrale (11) inclut un moyen pour comparer les données cryptée et non-cryptée d'identification du terminal pour authentifier l'identité du terminal.

11. Système selon l'une quelconque des revendications 5 à 10 dans lequel la dite installation centrale inclut, en outre, un moyen (21) pour engendrer une donnée de facturation basée sur la dite donnée d'identification du terminal et la dite donnée d'identification du programme.
